# EUROPÄISCHE PATENTANMELDUNG

(11) **EP 4 807 022 A1**
(43) Veröffentlichungstag der Anmeldung: **16.09.2026**
(21) Anmeldenummer: 25162930.9
(22) Anmeldetag: 11.03.2025
(51) Int. Cl.: C21C 5/52, C21C 5/56, F27B 3/08, F27B 3/18, F27D 13/00

(54) **VERFAHREN ZUM ERZEUGEN VON FLÜSSIGEM STAHL IN EINEM LICHTBOGENOFEN MIT EINEM SCHROTTVORWÄRMSYSTEM**

(71) Anmelder: Primetals Technologies Austria GmbH, 4031 Linz (AT)
(72) Erfinder: Altmann, Rudolf, 77694 Kehl (DE)
(74) Vertreter: Metals@Linz

(57) **Zusammenfassung**

Die Erfindung betrifft das Gebiet der metallurgischen Anlagen, konkret eine Anlage zum Erzeugen von flüssigem Stahl in einem Elektrolichtbogenofen mit einem Schrottvorwärmsystem.

Die Aufgabe der Erfindung ist es ein Verfahren bereitzustellen, welches ein schnelleres Einbringen des flüssigen Metalls in den Lichtbogenofen und somit ein schnelleres Herstellen der Stahlschmelze ermöglicht.

Die Aufgabe wird gelöst durch ein Verfahren bei welchem im Anschluss nach einer vorgewärmten Schrottladung zumindest eine zweite Schrottladung mit vorgegebenem Schrottgewicht dem Schrottvorwärmsystem (4) zugeführt wird. Sobald die zweite Schrottladung vollständig chargiert wurde, wird dem Schmelzgefäß (3) flüssiges Roheisen (12), über eine Öffnung (3b) im Schmelzgefäß (3) zugeführt. Zumindest 5 Minuten bevor ein Abgießvorgang erfolgt, wird dem Schrottvorwärmsystem (5) eine Schrottladung mit vorgegebener Menge zur Vorwärmung zugeführt, welche für einen nachfolgenden Einschmelzvorgang herangezogen wird. Nach dem Abgießvorgang der vorgegebenen Absichtmenge verbleicht zumindest 50% der vorgegebnenen Abstichmenge an flüssigem Stahl (5) im Schmelzgefäß (3) verbleibt.

## Beschreibung

### Gebiet der Technik

Die Erfindung betrifft das Gebiet der metallurgischen Anlagen, konkret eine Anlage zum Erzeugen von flüssigem Stahl in einem Elektrolichtbogenofen mit einem Schrottvorwärmsystem.

Einerseits betrifft die Erfindung ein Verfahren zum Herstellen einer Stahlschmelze in einem Elektrolichtbogenofen, welcher Elektroden, ein Schmelzgefäß und ein Schrottvorwärmsystem umfasst. Im Schmelzgefäß befindet sich flüssiger Stahl, das Schrottvorwärmsystem beinhaltet eine vorgewärmte erste Schrottladung mit vorgegebenem Schrottgewicht, wobei sich die Elektroden in einer oberen Position befinden und die vorgewärmte erste Schrottladung in das Schmelzgefäß chargiert wird.

Andererseits betrifft die Erfindung ein Verfahren zum Herstellen einer Stahlschmelze in einem Elektrolichtbogenofen, welcher Elektroden, ein Schmelzgefäß und ein Schrottvorwärmsystem umfasst, wobei sich zu Beginn im Schmelzgefäß kein flüssiger Stahl befindet. Die Elektroden befinden sich in einer oberen Position, wenn eine erste Schrottladung in das Schmelzgefäß chargiert wird, unmittelbar nachfolgend werden die Elektroden in eine untere Einschmelzposition gefahren und der Einschmelzvorgang der ersten Schrottladungen durch Energieeinbringung über die Elektroden startet. Im Anschluss wird zumindest eine zweite Schrottladung mit vorgegebenem Schrottgewicht dem Schrottvorwärmsystem zugeführt. Nachdem zumindest 60%, bevorzugt zumindest 80%, der ersten Schrottladung geschmolzen ist, wird die zweite Schrottladung in das Schmelzgefäß chargiert.

### Stand der Technik

Ein Lichtbogenofen mit einem Schrottvorwärmsystem und das Betreiben eines solchen Ofens sind beispielsweise im Dokument WO2012/038320 gezeigt. Ein solcher Lichtbogenofen weist ein voll oder teilintegriertes Schrottvorwärmsystem auf, bei welchem der Schrott als Schrottladung eingebracht wird, im Schrottvorwärmsystem vorgewärmt wird und dann zugeführt wird. Für das Betreiben eines solchen Ofens wird üblicherweise Schrott verwendet. Es gibt immer mehr Bestrebungen in solche Lichtbogenöfen auch zusätzliches flüssiges Metall einzubringen. Das Flüssige Metall wird über eine Schüttrinne durch eine Öffnung beim Lichtbogenofen eingebracht. Beim Einbringen von dem flüssigen Metall kann es zu Reaktionen zwischen dem flüssigen Metall und der im Lichtbogenofen befindlichen flüssigen Stahlschmelze kommen, wodurch Schlacke gegen die Schüttrinne läuft und der Vorgang unterbrochen werden muss, bis sich die Schlacke die Schüttrinne wieder freigibt.

### Zusammenfassung der Erfindung

Die Aufgabe der Erfindung ist es ein Verfahren bereitzustellen, welches ein schnelleres Einbringen des flüssigen Metalls in den Lichtbogenofen und somit ein schnelleres Herstellen der Stahlschmelze ermöglicht.

Die Aufgabe wird gelöst durch ein Verfahren, bei welchem zumindest eine zweite Schrottladung mit vorgegebenem Schrottgewicht dem Schrottvorwärmsystem zugeführt wird. Das Schrottgewicht hängt dabei maßgeblich von der Ofengröße ab. Die zweite Schrottladung wird ohne lange Verweilzeit in das Schmelzgefäß chargiert. Es erfolgt also keine längere Vorwärmung. Im Anschluss werden die Elektroden in eine untere Einschmelzposition gefahren und der Einschmelzvorgang der ersten und zweiten Schrottladungen durch Energieeinbringung über die Elektroden startet. Sobald die zweite Schrottladung vollständig chargiert wurde, wird dem Schmelzgefäß flüssiges Roheisen, über eine Öffnung im Schmelzgefäß, zugeführt, wobei bevorzugt die Menge zugeführtem Roheisen nicht größer ist als die Menge an zugeführten Schrottladungen ist.

In einem Zeitraum von zumindest 5 Minuten, bevorzugt zumindest 10 Minuten, besonders bevorzugt von zumindest 15 Minuten bevor ein Abgießvorgang erfolgt, wird dem Schrottvorwärmsystem eine Schrottladung mit vorgegebener Menge zur Vorwärmung zugeführt, welche für einen nachfolgenden Einschmelzvorgang herangezogen wird. Sobald der Abgießvorgang erfolgt, wird eine vorgegebene Abstichmenge von flüssigem Stahl in ein metallurgisches Gefäß über eine Abstichöffnung des Schmelzgefäßes abgegossen, wobei nach dem Abgießvorgang im Schmelzgefäß zumindest 50%, bevorzugt zumindest 80%, besonders bevorzugt zumindest 100%, ganz besonders bevorzugt 120% der vorgegebnenen Abstichmenge im Schmelzgefäß verbleibt.

Die Vorgehensweise, dass zu Beginn eine vorgewärmte Schrottladung und eine weitere Schrottladung unmittelbar hintereinander eingebracht werden und in weiterer Folge noch Roheisen in den Schmelzprozess eingebracht wird hat sich als vorteilhaft erwiesen.

Beim Einbringen von flüssigem Metall, welches einen Kohlenstoffgehalt von 4% hat und bei hohen Temperaturen der Stahlschmelze im Schmelzgefäß von über 1550°C kommt es zu Reaktionen, welche zu erhöhter Schlacke Bildung führt. Durch diese erhöhte Schlacke Bildung wird eine Einbringvorrichtung zum Einbringen des flüssigen Metalls blockiert und der Einbringvorgang muss verringert oder sogar gestoppt werden um einen Überlauf durch die Öffnung zu verhindern. Durch das Einbringen der zweiten Schrottladung, bevor das heiße Metall zugeführt wird, kann die Temperatur so weit abgesenkt werden, dass die Reaktionen vermieden werden und ein schnelleres Einbringen des heißen Metalls erfolgen kann. Durch diese Vorgehensweise konnte die Zeit zum Herstellen der Stahlschmelze um 4-5 Minuten reduziert werden und zusätzlich konnten 40 - 50kWh Energie eingespart werden.

Der Ablauf des Verfahrens zum Herstellen einer Stahlschmelze in einem Elektrolichtbogenofen mit einem Schrottvorwärmsystem - beispielsweise ein Quantum EAF - mit 100t Abstichgewicht - kann wie folgt ablaufen:
- Zu Beginn einer neuen Schmelze befindet sich 80-120% des Abstichgewichts flüssige Stahlschmelze im Schmelzgefäß - dies entspricht 80 -120 Tonnen flüssiger Stahlschmelze und vorgewärmter Schrott mit einem Gewicht von ungefähr 35 Tonnen, welcher während dem Schmelzvorgange der vorhergehenden Schmelze erwärmt wurde, befindet sich im Schrottvorwärmsystem.
- Der vorgewärmte Schrott mit einem Gewicht von 35 Tonnen wird vom Schrottvorwärmsystem in das Schmelzgefäß chargiert.
- Nach dem vollständigen Einbringen des vorgewärmten Schrotts wird eine Schüttrinne zum Zuführen von flüssigem Metall wird in Position gebracht um, beispielsweise über eine Schlackentür, flüssiges Metall aus einer Pfanne in das Schmelzgefäß einzubringen und das Schrottvorwärmsystem wird einer zweiten Schrottladung mit einem Gewicht von 30-35 Tonnen befüllt.
- Die zweite Schrottladung wird nach vollständigem einbringen in das Schrottvorwärmsystem ohne weitere Vorwärmung in das Schrottgefäß chargiert, dieser Vorgang dauert ungefähr 1 - 2 Minuten.
- Nach vollständigem chargieren der zweiten Schrottladung wird ungefähr 30 Tonnen flüssiges Metall aus der Pfanne in die Schüttrinne gegossen und so dem Schmelzgefäß zugeführt. Dieser Vorgang dauert ungefähr 6-7 Minuten.
- In das Schrottvorwärmsystem wird 5-15 Minuten vor dem Abstich der Schmelze eine Schrottladung von 30-35 Tonnen für die nachfolgende Stahlschmelze zum Vorwärmen eingebracht.
- Sobald die Stahlschmelze fertiggestellt ist, erfolgt der Abstich.

Die Aufgabe wird auch dadurch gelöst, dass nachdem zumindest 60%, bevorzugt zumindest 80%, der ersten und zweiten Schrottladung eingeschmolzen sind dem Schmelzgefäß flüssiges Roheisen, über eine Öffnung im Schmelzgefäß, zugeführt werden. Das Bestimmen wieviel Prozent der Schrottladungen bereits eingeschmolzen worden ist kann beispielsweise erfolgen aus Erfahrungswerten und aus Berechnungen anhand der zugeführten Materialien und der Energiemengen, die in den Einschmelzvorgang eingebracht wurden. Zumindest 5 Minuten, bevorzugt zumindest 10 Minuten, besonders bevorzugt 15 Minuten bevor ein Abgießvorgang erfolgt, wird dem Schrottvorwärmsystem eine Schrottladung mit vorgegebener Menge zur Vorwärmung zugeführt, welche für einen nachfolgenden Einschmelzvorgang herangezogen wird. Sobald der Abgießvorgang erfolgt, wird eine vorgegebene Abstichmenge von flüssigem Stahl in ein metallurgisches Gefäß über eine Abstichöffnung des Schmelzgefäßes abgegossen, wobei nach dem Abgießvorgang im Schmelzgefäß zumindest 50%, bevorzugt zumindest 80%, besonders bevorzugt zumindest 100%, ganz besonders bevorzugt 120% der vorgegebnenen Abstichmenge im Schmelzgefäß verbleibt. Diese Vorgehensweise ist beim Herstellen der ersten Schmelze von Vorteil, da auf diese Weise die erste Schmelze schneller hergestellt werden kann.

Eine bevorzugte Ausführung sieht vor, dass das Roheisen über die Schlackentür oder einer anderen Öffnung, welches sich an einer Seitenwand des Schmelzgefäßes befindet, mittels eines Roheisenkippwagen mit eine Schüttrinne eingebracht wird.

Eine vorteilhafte Ausführung sieht vor, dass eine dritte Schrottladung vorgewärmt wird und nach dem Einbringen vom Roheisen dem Schmelzgefäß zugeführt wird.

Eine zweckmäßige Ausführungsform sieht vor, dass die pro Einschmelzvorgang zugeführte Menge an Schrottladungen und Roheisen in einem Verhältnis von 1:1 - 4:1 liegt. Dies bedeutet also, dass für jeden Einschmelzvorgang zumindest 50% bis maximal 80% Schrott und maximal 50% bis minimal 20% Roheisen in das Schmelzgefäß eingebracht wird.

Eine bevorzugte Ausführung sieht vor, dass eine Position der Schüttrinne eine Roheisenkippwagens während des Einbringens vom Roheisen in das Schmelzgefäß verändert werden kann, um bei einer Veränderung des Kippwinkels des Schmelzgefäßes sicherzustellen, dass die Schüttrinne sich derart in der Einbringungsöffnung befindet, dass ein vollständiges Einbringen des Roheisens gewährleistet ist.

Durch diese Ausführung, dass die Schüttrinne in einer Höhe und/oder einem Winkel verstellbar ist kann man das Schmelzgefäß um einen Winkel von bevorzugt 2-3° kippen, um eine Unterkante der Einbringungsöffnung zu erhöhen um einen Schlackenaustritt, bei auftretenden Reaktionen beim Einbringen von flüssigem Roheisen zu verhindern.

### Kurze Beschreibung der Zeichnungen

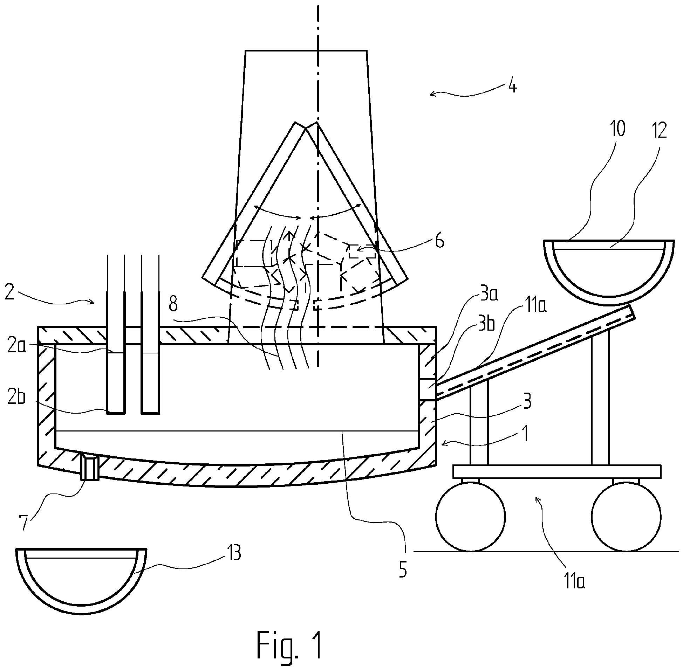

In Fig. 1 ist schematisch ein Elektrolichtogenofen mit Schrottvorwärmsystem dargestellt Beschreibung der Ausführungsformen

In der Fig. 1 ist ein Elektrolichtbogenofen 1 mit Elektroden 2, einem Schmelzgefäß 3 und einem Schrottvorwärmsystem 4. Im Schmelzgefäß 3 befindet sich bereits flüssiger Stahl 5. Im Schrottvorwärmsystem 4 befindet sich Schrott 6, welcher bereits von heißen Abgasen 8 aus dem Schmelzgefäß vorgewärmt wurde.

Die Elektroden befindet sich in einer oberen Position 2a wenn der Schrott 6 eingebracht wird. Sobald der Schrott 6 dann in das Schmelzgefäß 3 eingebracht wurde, werden die Elektroden in eine untere Einschmelzposition 2b gefahren. Mit einem Roheisenkippwagen 11 mit Schüttrinne 11a wird aus einer Pfanne 10 Roheisen 12 in das Schmelzgefäß 3 eingebracht. Der Roheisenkippwagen 11 mit Schüttrinne 11a wird dabei an einer Öffnung 3b, welche sich in einer Seitenwand 3a des Schmelzgefäß 3 befindet - beispielsweise über die Schlackentür - angeordnet und das Roheisen 12 wird über die Pfanne 10 auf die Schüttrinne 11a gegossen und dem Schmelzgefäß 3 zugeführt. In das Schrottvorwärmsystem wird 5 - 15 Minuten bevor ein Abstich erfolgt eine weitere Schrottladung eingebracht, um durch die heißen Abgase 8 für einen nachfolgenden Einschmelzvorgang vorgewärmt zu werden. Sobald die Schmelze fertig gestellt ist, erfolgt ein Abgießvorgang in ein metallurgisches Gefäß 13 über die Abstichöffnung 7.

### Bezugszeichenliste

- 1: Elektrolichtbogenofen
- 2: Elektroden
- 2a: obere Position
- 2b: untere Einschmelzposition
- 3: Schmelzgefäß
- 3a: Seitenwand
- 3b: Öffnung
- 4: Schrottvorwärmsystem
- 5: flüssiger Stahl
- 6: Schrott
- 7: Abstichöffnung
- 8: Abgase
- 10: Pfanne
- 11: Roheisenschüttwagen
- 11a: Schüttrinne
- 12: Roheisen
- 13: metallurgisches Gefäß

## Patentansprüche

1. Verfahren zum Herstellen einer Stahlschmelze in einem Elektrolichtbogenofen (1), welcher Elektroden (2), ein Schmelzgefäß (3) und ein Schrottvorwärmsystem (4) umfasst, wobei sich im Schmelzgefäß (4) flüssiger Stahl (5) befindet, das Schrottvorwärmsystem (4) beinhaltet eine vorgewärmten erste Schrottladung mit vorgegebenem Schrottgewicht, wobei sich die Elektroden (2) in einer oberen Position (2a) befinden und die vorgewärmte erste Schrottladung in das Schmelzgefäß (3) chargiert wird, **dadurch gekennzeichnet, dass**
• im Anschluss zumindest eine zweite Schrottladung mit vorgegebenem Schrottgewicht dem Schrottvorwärmsystem (4) zugeführt wird,
• nachfolgend wird die zweite Schrottladung in das Schmelzgefäß (4) chargiert,
• im Anschluss werden die Elektroden (2) in eine untere Einschmelzposition (2b) gefahren und der Einschmelzvorgang der Schrottladungen durch Energieeinbringung über die Elektroden (2) startet,
• sobald die zweite Schrottladung vollständig chargiert wurde, wird dem Schmelzgefäß (3) flüssiges Roheisen (12), über eine Öffnung (3b) im Schmelzgefäß (3), zugeführt, bevorzugt ist die Menge von zugeführtem Roheisen nicht größer ist als die Menge an zugeführten Schrottladungen während des Einschmelzvorgangs,
• wobei zumindest 5 Minuten, bevorzugt zumindest 10 Minuten, besonders bevorzugt zumindest 15 Minuten, bevor ein Abgießvorgang erfolgt, wird dem Schrottvorwärmsystem (5) eine Schrottladung mit vorgegebener Menge zur Vorwärmung zugeführt, welche für einen nachfolgenden Einschmelzvorgang herangezogen wird,
• sobald der Abgießvorgang erfolgt, wird eine vorgegebene Abstichmenge von flüssigem Stahl in ein metallurgisches Gefäß (13) über eine Abstichöffnung (7) des Schmelzgefäßes (3) abgegossen, wobei nach dem Abgießvorgang im Schmelzgefäß zumindest 50%, bevorzugt zumindest 80%, besonders bevorzugt zumindest 100%, ganz besonders bevorzugt 120% der vorgegebnenen Abstichmenge an flüssigem Stahl (5) im Schmelzgefäß (3) verbleibt.

2. Verfahren zum Herstellen einer Stahlschmelze in einem Elektrolichtbogenofen (1), welcher Elektroden (2), ein Schmelzgefäß (3) und ein Schrottvorwärmsystem (4) umfasst, wobei sich zu Beginn im Schmelzgefäß (4) kein flüssiger Stahl (5) befindet,
• sich die Elektroden (2) in einer oberen Position (2a) befinden und eine erste Schrottladung in das Schmelzgefäß (5) chargiert wird,
• unmittelbar nachfolgend werden die Elektroden (2) in eine untere Einschmelzposition (2b) gefahren und der Einschmelzvorgang der ersten Schrottladungen durch Energieeinbringung über die Elektroden (2) startet,
• wobei zumindest eine zweite Schrottladung mit vorgegebenem Schrottgewicht dem Schrottvorwärmsystem (4) zugeführt wird,
• nachdem zumindest 60%, bevorzugt zumindest 80%, der ersten Schrottladung geschmolzen ist, wird die zweite Schrottladung in das Schmelzgefäß (3) chargiert,
**dadurch gekennzeichnet, dass**
• nachdem zumindest 60%, bevorzugt zumindest 80%, der ersten und zweiten Schrottladung eingeschmolzen ist wird dem Schmelzgefäß (3) flüssiges Roheisen (12), über eine Öffnung (3b) im Schmelzgefäß (3) zugeführt werden,
• zumindest 5 Minuten, bevorzugt zumindest 10 Minuten, besonders bevorzugt zumindest 5 Minuten bevor ein Abgießvorgang erfolgt, wird dem Schrottvorwärmsystem (4) eine Schrottladung mit vorgegebener Menge zur Vorwärmung zugeführt, welche für einen nachfolgenden Einschmelzvorgang herangezogen wird,
• sobald der Abgießvorgang erfolgt, wird eine vorgegebene Abstichmenge von flüssigem Stahl (5) in ein metallurgisches Gefäß (13) über eine Abstichöffnung (7) des Schmelzgefäßes (3) abgegossen,
• wobei nach dem Abgießvorgang im Schmelzgefäß (3) zumindest 50%, bevorzugt zumindest 80%, besonders bevorzugt zumindest 100%, ganz besonders bevorzugt 120% der vorgegebnenen Abstichmenge im Schmelzgefäß (3) verbleibt.

3. Verfahren zum Herstellen einer Stahlschmelze in einem Elektrolichtbogenofen (1) nach einem der vorhergehenden Ansprüche, **dadurch gekennzeichnet, dass** das Roheisen (12) über eine Einbringungsöffnung, bevorzugt eine Schlackentür oder einer andere Öffnung, welches sich an einer Seitenwand (3a) des Schmelzgefäßes (3) befindet, mit einem Roheisenkippwagen (11) miteiner Schüttrinne (11a) eingebracht wird.

4. Verfahren zum Herstellen einer Stahlschmelze in einem Elektrolichtbogenofen (1) nach einem der vorhergehenden Ansprüche, **dadurch gekennzeichnet, dass** eine dritte Schrottladung vorgewärmt wird und nach dem Einbringen vom Roheisen dem Schmelzgefäß (3) zugeführt wird.

5. Verfahren zum Herstellen einer Stahlschmelze in einem Elektrolichtbogenofen (1) nach einem der vorhergehenden Ansprüche, **dadurch gekennzeichnet, dass** die pro Einschmelzvorgang zugeführte Menge an Schrottladungen und Roheisen in einem Verhältnis von 1:1 - 4:1 liegt.

6. Verfahren zum Herstellen einer Stahlschmelze in einem Elektrolichtbogenofen (1) nach Anspruch, **dadurch gekennzeichnet, dass** eine Position der Schüttrinne (11a) des Roheisenkippwagens (11) während des Einbringens vom Roheisen (12) in das Schmelzgefäß (3) verändert werden kann um bei einer Veränderung des Kippwinkels des Schmelzgefäßes (3) sicherzustellen, dass die Schüttrinne (11a) sich derart in der Öffnung (3b) befindet, dass ein vollständiges Einbringen des Roheisens gewährleistet ist.
